# FASCICULE DE BREVET EUROPEEN

(11) **EP 3 909 652 B1**
(45) Date de publication et mention de la délivrance du brevet: **06.07.2022**
(21) Numéro de dépôt: 21170959.7
(22) Date de dépôt: 28.04.2021
(51) Int. Cl.: A62C 3/08, F02C 7/25, A62C 35/02, A62C 37/44, B64D 45/00

(54) **AÉRONEF COMPRENANT UN ENSEMBLE PROPULSIF ET UN SYSTÈME ANTI-INCENDIE DE L'ENSEMBLE PROPULSIF**
LUFTFAHRZEUG, DAS EINE ANTRIEBSEINHEIT UND EIN BRANDSCHUTZSYSTEM FÜR DIESE ANTRIEBSEINHEIT UMFASST
AIRCRAFT INCLUDING A PROPULSION ASSEMBLY AND A FIRE PROTECTION SYSTEM FOR THE PROPULSION ASSEMBLY

(30) Priorité: 13.05.2020 FR 2004694
(43) Date de publication de la demande: 17.11.2021
(73) Titulaire: AIRBUS OPERATIONS (S.A.S.), 31060 Toulouse (FR)
(72) Inventeur: GUICHOT, Arnaud, 31060 TOULOUSE (FR); PUGLIESE, Stéphane, 31060 TOULOUSE (FR); CLAVEL, Thierry, 31060 TOULOUSE (FR); BRACHET, Nicolas, 31700 BLAGNAC (FR)
(74) Mandataire: Gicquel, Olivier Yves Gérard

(56) Documents cités:
- EP-A2- 3 572 127
- WO-A1-81/01796
- FR-A1- 3 022 219
- GB-A- 651 070
- US-A- 2 385 825
- US-A- 2 577 744
- US-A1- 2016 368 618

## Description

La présente invention concerne un aéronef comprenant un ensemble propulsif et un système anti-incendie dédié audit ensemble propulsif pour détecter et éteindre un incendie qui pourrait survenir sur l'ensemble propulsif. Les documents FR3022219A1 et US 2,577,744A divulguent des systèmes anti-incendie pour les systèmes de propulsion d'un aéronef.

De manière connue, un aéronef comporte au moins un ensemble propulsif fixé sous chacune de ses ailes et, dédié à chacun des ensembles propulsif, un système anti-incendie permettant de détecter et d'éteindre un incendie survenant sur l'ensemble propulsif.

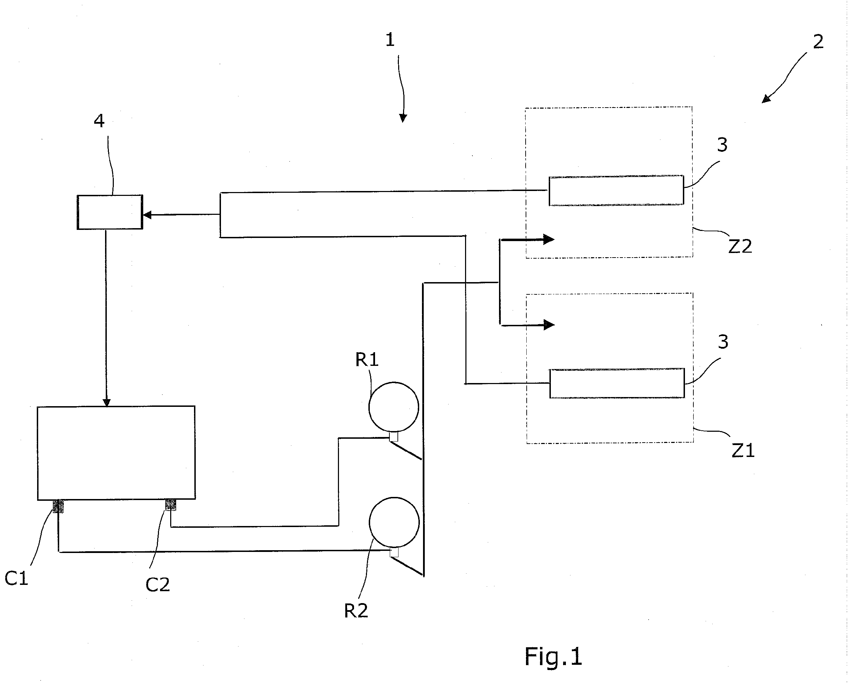

La figure 1 est une représentation schématique d'un système anti-incendie 1 de l'état de la technique dédié à un ensemble propulsif 2. L'ensemble propulsif 2 comprend une pluralité de zones feu Z1, Z2, de différentes tailles, fermées par des parois et joints feu afin d'éviter la propagation de l'incendie hors d'une zone feu et donc également d'une zone feu vers les autres zones feu.

Dans chaque zone feu Z1, Z2 le système anti-incendie 1 comprend au moins une boucle de détection 3 équipée d'au moins un capteur incendie pour détecter un départ de feu. Toutes les boucles de détection 3 sont électriquement connectées à une unité de détection 4 configurée pour déclencher une alarme incendie sonore ou visuelle dans le poste de pilotage à destination des pilotes dans le cas où un incendie est détecté par un capteur incendie d'une zone feu Z1, Z2.

Suite au déclenchement d'une alarme incendie, le pilote suit une procédure le menant à actionner une première commande C1 localisée dans le poste de pilotage pour déclencher l'émission, vers chacune des zones feu Z1, Z2, d'un volume d'agent extincteur contenu dans un premier réservoir R1. Si le feu persiste, le pilote actionne une seconde commande C2 localisée dans le poste de pilotage pour reproduire la même action, mais cette fois avec un second réservoir R2.

Puisque l'unité de détection 4 n'est pas, par conception, en mesure de détecter précisément quelle est la zone feu Z1, Z2 touchée par un incendie, chaque réservoir R1, R2 contient un volume d'agent nécessaire pour alimenter l'ensemble des zones feu Z1, Z2 avec suffisamment d'agent extincteur pour y éteindre un incendie.

Un tel système anti-incendie donne entière satisfaction, mais l'exigence de réduction de masse et/ou d'encombrement qui prédomine la construction des aéronefs induit un besoin de trouver un système anti-incendie offrant la même efficacité, mais avec une masse réduite et/ou un volume réduit.

L'invention vise à répondre en tout ou partie à ce besoin et concerne un aéronef comprenant un poste de pilotage, au moins un ensemble propulsif et un système anti-incendie dédié à chaque ensemble propulsif, chaque système anti-incendie comprenant deux réservoirs contenant chacun un agent extincteur, et associée à chaque réservoir, une commande actionnable par un pilote pour l'ouverture de chaque réservoir afin de libérer l'agent extincteur hors du réservoir, un ensemble de détection configuré pour détecter un incendie dans l'ensemble propulsif auquel le système anti-incendie est dédié et émettre, le cas échéant, un signal d'alerte incendie à destination d'un transducteur visuel ou sonore situé dans le poste de pilotage, l'ensemble propulsif comprend un premier et un second compartiment comprenant chacun au moins une zone feu, et le système anti-incendie comprend une vanne de dérivation pilotée par une unité de localisation, un ensemble de canalisations reliant chaque réservoir à chacune des zones feu au travers de la vanne de dérivation, l'unité de localisation étant configurée pour détecter un incendie dans la ou les zones feu du premier compartiment, et le cas échéant, piloter la vanne de dérivation dans un premier état, dit commandé, dans lequel l'agent extincteur d'un réservoir est expulsé vers la ou les zones feu du premier compartiment après activation de la commande associée au réservoir, la vanne de dérivation étant pilotée dans un second état sinon, dit état par défaut, dans lequel l'agent extincteur d'un réservoir est expulsé vers les zones feu du second compartiment après activation de la commande associée au réservoir.

Selon l'invention, le système anti-incendie est capable de déterminer, en cas de survenue d'un incendie, si cet incendie démarre dans le premier compartiment ou pas, et d'orienter la diffusion de l'agent extincteur uniquement vers la ou les zones feu du premier compartiment si ce dernier est touché par un incendie, ou vers la ou les zones feu du second compartiment sinon. Le volume d'agent extincteur dans chaque réservoir peut ainsi être diminué comparativement à l'état de la technique, car il n'y a plus d'obligation de contenir un volume permettant l'extinction d'un incendie dans toutes les zones feu de l'ensemble propulsif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la figure 1, déjà décrite, est une représentation schématique d'un système anti-incendie de l'état de la technique ;
la figure 2 est une représentation schématique d'un aéronef selon l'invention comprenant un ensemble propulsif et un système anti-incendie dédié audit ensemble propulsif ;
la figure 3, similaire à la figure 1, est une représentation schématique du système anti-incendie de l'aéronef illustré en figure 2.

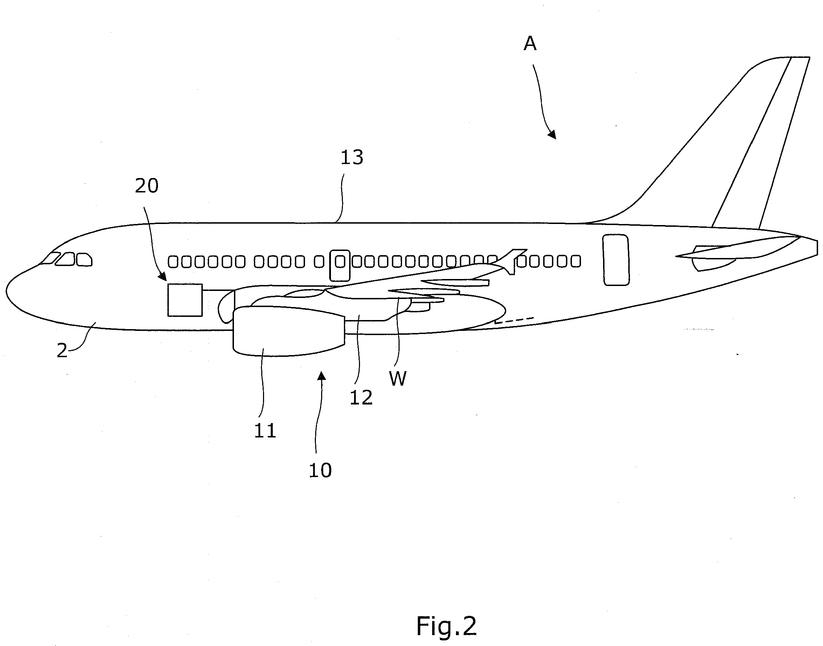

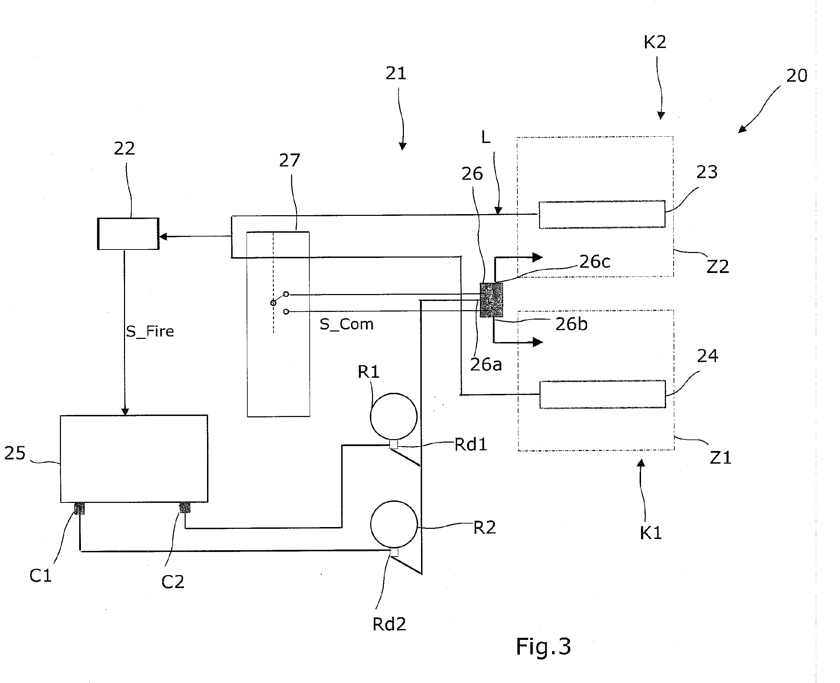

En référence avec les figures 2 et 3, un aéronef A comporte au moins un ensemble propulsif 10 accroché sous chacune de ses ailes W. Chaque ensemble propulsif 10 comporte une nacelle 11 entourant un moteur (non représenté), ainsi qu'un mât de fixation 12 du moteur fixé sous l'aile L de l'aéronef et sous lequel est accroché le moteur.

L'ensemble propulsif 10 est divisé en un premier et un second compartiment K1, K2. Chaque compartiment K1, K2 comprend au moins une zone feu Z1, Z2. Les zones feu Z1, Z2 de l'ensemble propulsif 10 sont séparées entre elles par des parois et joints feu (non représentés) pour contenir tout incendie dans les limites d'une zone feu et empêcher sa propagation vers une autre zone feu.

On remarquera que sur l'exemple représenté en figure 3, deux zones feu Z1, Z2 sont représentées, avec une zone feu Z1 appartenant au premier compartiment K1 et une zone feu Z2 appartenant au second compartiment K2. Dans la suite de la description, sauf mention contrainte, on décrira ce mode de réalisation pour lequel chaque compartiment K1, K2 comprend une unique zone feu Z1, Z2.

L'aéronef A comprend un système anti-incendie 20 dédié à chaque ensemble propulsif 10 pour détecter et éteindre par l'envoi d'un agent extincteur, tout incendie qui pourrait survenir.

De manière classique, le système anti-incendie 20 d'un ensemble propulsif 10 contient deux réservoirs R1,R2 (par exemple, de contenance identique) contenant chacun un volume d'agent extincteur, un ensemble de canalisations (tuyaux représentés sur les figures) reliant les réservoirs R1,R2 à l'ensemble des zones feu Z1, Z2, un ensemble de détection 20 pour détecter un incendie et déclencher, le cas échéant, une alerte incendie dans le poste de pilotage de l'aéronef A, ainsi que deux commandes d'activation C1, C2 situées dans le poste de pilotage et actionnables par le pilote pour déclencher l'émission d'agent extincteur vers le feu à éteindre, en particulier lorsque une alerte incendie est émise et entendue par le pilote.

Chaque réservoir R1, R2 par exemple situé dans le mât 12 de l'ensemble propulsif 10 ou le fuselage 13, est équipé d'un système d'ouverture et de déclenchement.

Le système d'ouverture et de déclenchement comprend, par exemple, une tête de décharge Rdl, Rd2 vissée sur le réservoir et une cartouche pyrotechnique (non représentée) arrangée dans la tête de décharge Rdl, Rd2 en regard d'un scellé (non représenté) qui ferme le réservoir. La cartouche pyrotechnique du premier réservoir R1 est mise à feu par l'actionnement d'une première commande d'activation C1 pour casser le scellé et libérer l'agent extincteur sous pression hors du premier réservoir R1. Similairement, la cartouche pyrotechnique du second réservoir R2 est mise à feu par l'actionnement d'une seconde commande d'activation C2 pour casser le scellé et libérer l'agent extincteur sous pression hors du second réservoir R2. La première et la seconde commande Cl, C2 sont par exemple des boutons poussoirs ou des leviers.

L'ensemble de détection 21 comprend une unité de détection 22, située par exemple dans le fuselage 13, et une pluralité de boucles de détection L (une seule représentée sur la figure 3) électriquement connectées à l'unité de détection 22. Chaque boucle de détection L comprend au moins une partie dédiée à une zone feu Z1, Z2 de l'ensemble propulsif 10, c'est-à-dire qu'il y a au moins une partie d'une boucle de détection L pour chacune des zones feu Z1, Z2 de chaque compartiment K1, K2. Un partie d'une boucle de détection L, comprend pour la zone feu Z1, Z2 à laquelle elle est dédiée, au moins un capteur d'incendie 23, 24 arrangé dans ladite zone feu Z1, Z2. Sur la figure 3, l'unique boucle de détection L représentée comprend une partie dédiée à la zone feu Z2 du second compartiment K2, avec un capteur d'incendie 23, et une partie dédiée à la zone feu Z1 du premier compartiment K1, avec un capteur d'incendie 24.

L'unité de détection 22 mesure en permanence une valeur électrique du circuit formé par chacune des boucles de détection L et émet un signal d'alerte incendie S_Fire lorsque la mesure de la valeur électrique est indicatrice d'un incendie. Le signal d'alerte incendie S_Fire est reçu par au moins un transducteur 25 visuel et/ou sonore situé dans le poste de pilotage afin de déclencher une alerte incendie à destination des pilotes et les prévenir d'un incendie sur l'ensemble propulsif 10.

Dans le cas où la valeur électrique mesurée est une résistance (dans ce cas, mesure d'impédance équivalente), l'unité de détection 22 émet un signal d'alerte incendie S_Fire lorsque la valeur de la résistance mesurée sur au moins une des boucles de détection L se situe dans une plage de valeurs prédéterminées.

Selon l'invention, le système anti-incendie 20 est capable de déterminer, en cas de survenue d'un incendie, si la zone feu Z1, Z2 d'un compartiment K1, K2 est touchée ou pas, et d'orienter la diffusion de l'agent extincteur uniquement vers le compartiment K1, K2 comprenant la zone feu Z1, Z2 touchée par un incendie, ou vers l'autre compartiment K2, K1 sinon.

A cet effet, le système anti-incendie 20 selon l'invention comprend :
- une vanne de dérivation 26 avec une entrée 26a et deux sorties 26b, 26c. L'entrée 26a de la vanne de dérivation 26 est connectée, via une canalisation, à chacun des réservoirs R1,R2 tandis qu'une première sortie débouche 26b via une canalisation dans la zone feu Z1 du premier compartiment K1 et la seconde sortie 26c débouche, via une canalisation, dans la zone feu Z2 du second compartiment K2.
- une unité de localisation 27, à laquelle sont électriquement connectées d'une part la ou les boucles de détection L dédiées à la zone feu Z1 du premier compartiment K1, et d'autre part la vanne de dérivation 26.

La vanne de dérivation 26 est configurée pour être commandée pour prendre deux états, avec un premier état, dit commandé, dans lequel le chemin fluidique dans ladite vanne va de l'entrée 26a vers la première sortie 26b conduisant au premier compartiment K1 et un second état, dit par défaut, dans lequel le chemin fluidique dans ladite vanne passe de l'entrée 26a vers la seconde sortie 26c conduisant au second compartiment K2.

Dans un mode de réalisation, la vanne de dérivation 26 est, par exemple de type électromécanique, et comprend un corps (non représenté) avec une entrée à laquelle sont fluidiquement connectés la tête de décharge de chacun des deux réservoirs R1, R2 par exemple au moyen d'un raccord en Y, et les deux sorties de fluides 26b-c, l'une débouchant via une canalisation dans la zone feu Z1 du premier compartiment K1, l'autre sortie dans la zone feu Z2 du second compartiment K2 via une autre canalisation. La vanne de dérivation 26 comprend un actionneur (non représenté), électriquement connecté à l'unité de localisation 27, permettant de faire bouger un volet mobile (non représenté) dans le corps de la vanne de dérivation 26. Le volet peut prendre l'une des deux positions suivante afin d'orienter l'agent extincteur arrivant dans le corps de la vanne de dérivation 26 par l'entrée de fluide 26a: une première position correspondant à l'état commandé de la vanne de dérivation 26 et une seconde position correspond à l'état par défaut de la vanne de dérivation 26.

L'unité de localisation 27 est configurée pour mesurer une valeur électrique du circuit formé par la ou les parties des boucles de détection L qui sont dédiées au premier compartiment K1 et envoyer un signal de commande S_Com à la vanne de dérivation 26 pour commander ladite vanne dans son état commandé si la valeur mesurée est indicatrice d'un incendie ; sinon la vanne de dérivation 26 reste dans son état par défaut.

La valeur électrique mesurée est, par exemple, une résistance (mesure de l'impédance équivalente). Dans ce cas, l'unité de localisation 27 envoie le signal de commande S_Com lorsque la valeur de la résistance mesurée se situe dans une plage de valeurs prédéterminées.

La logique de détection mise en œuvre par le système anti-incendie 20 est la suivante si un incendie a lieu dans une zone feu Z1 du premier compartiment K1 :
1) L'unité de localisation détecte un incendie dans la zone feu Z1 et envoie le signal de commande S_Com à la vanne de dérivation 26 pour la positionner dans son état commandé. Simultanément, l'unité de détection 22 détecte un incendie dans l'ensemble propulsif 10 et émet un signal d'alerte S_Fire. Le signal d'alerte S_Fire est transformé, par des transducteurs appropriés 25 situés dans le poste de pilotage, en alarme visuelle et/ou sonore à destination du pilote.
2) Le pilote active alors la procédure en cas d'incendie, et actionne la première commande C1 : l'agent extincteur de la première bouteille R1 est libéré vers le premier compartiment K1 pour éteindre l'incendie détecté dans la zone feu Z1.
3) Dans le cas où l'alarme incendie est toujours active dans le poste de pilotage quelques secondes après l'activation de la première commande Cl, le pilote actionne la seconde commande C2 et l'agent extincteur de la seconde bouteille R2 est libéré et expulsé vers le premier compartiment K1.

La logique de détection mise en œuvre par le système anti-incendie 20 est la suivante si un incendie a lieu dans une zone feu du second compartiment K2 :
1) L'unité de localisation 27 ne détecte pas d'incendie dans le premier compartiment K1, la vanne de dérivation 26 reste dans l'état par défaut. En revanche, l'unité de détection 22, détecte un incendie dans l'ensemble propulsif 10 et émet un signal d'alerte S_Fire. Le signal d'alerte S_Fire est transformé, par des transducteurs 26 appropriés situés dans le poste de pilotage, en alarme visuelle et/ou sonore à destination du pilote.
2) Le pilote active alors la procédure en cas d'incendie, et actionne la première commande C1 : l'agent extincteur de la première bouteille R1 est libéré vers le second compartiment K2.
3) Dans le cas où l'alarme incendie est toujours active quelques secondes après, le pilote actionne la seconde commande C2 et l'agent extincteur de la seconde bouteille R2 est libéré et expulsé vers le second compartiment K2.

De préférence, la logique est prévue pour qu'à partir du moment où la vanne de dérivation 26 a été positionnée dans son état commandé et qu'une commande C1 ou C2 a été actionnée, seule une opération de maintenance du système anti-incendie 20 par un opérateur peut ramener la vanne de dérivation 26 dans son état par défaut.

Dans le cas où chacun des compartiments K1, K2 de l'ensemble propulsif 10 contient une unique zone feu Z1, Z2, la quantité d'agent extincteur contenu dans chaque réservoir R1, R2 du système anti-incendie 20 selon l'invention est contraint par la quantité nécessaire pour éteindre la zone feu la plus dimensionnante entre Z1 ou Z2.

La conception du système anti-incendie selon l'invention permet ainsi, comparativement à l'art antérieur, une réduction de la quantité d'agent contenu dans chaque réservoir R1, R2 et donc de la masse embarquée dans l'aéronef A.

Dans le cas où l'ensemble propulsif 10 comporte plus de deux zones feu, par exemple si l'un ou les deux compartiments comprennent chacun plusieurs zones feu, le système de détection 20 incendie est modifié par rapport à ce qui a été dit plus haut uniquement en ce que la première sortie de fluide 26b de la vanne de dérivation 26 débouche, via une canalisation, dans chacune des zones feu du premier compartiment K1 si ce dernier comprend plusieurs zones feu et la seconde sortie de fluide 26c de la vanne de dérivation 26 débouche, via une canalisation, dans chacune des zones feu du second compartiment K2 si ce dernier comprend plusieurs zones feu.

En outre dans ce cas, l'unité de localisation 27 est connectée, outre à la vanne de dérivation 26, à la ou les parties des boucles de détection L (et donc les capteurs d'incendie des boucles de détection) qui sont dédiées aux zones feu du premier compartiment K1. L'unité de localisation 27 mesure une valeur électrique du circuit formé par ladite ou les dites parties et envoie un signal de commande S_Com à la vanne de dérivation 26 pour piloter ladite vanne 26 dans son état commandé si le signal présente une valeur indicatrice d'un incendie dans le premier compartiment K1.

Dans ce dernier cas, la quantité d'agent extincteur contenu dans chaque réservoir R1, R2 du système anti-incendie 20 selon l'invention est contraint par la quantité nécessaire pour éteindre le compartiment qui est le plus dimensionnant c'est-à-dire celui qui après simulations d'incendie, est celui nécessitant le plus d'agent extincteur pour y éteindre un incendie (par exemple du fait du passage de tuyau de liquides inflammables dans le compartiment, d'un plus grand volume ou d'une plus forte ventilation). Là encore, la conception du système anti-incendie 20 selon l'invention permet ainsi, comparativement à l'art antérieur, une réduction du volume de quantité d'agent contenu dans chaque réservoir R1, R2, et donc de la masse embarquée.

Le choix entre le premier ou le second compartiment K1, K2 pour le choix des états commandé/par défaut de la vanne de dérivation 26 peut être arbitraire. Dans un autre exemple, le choix est tel que l'état commandé de la vanne de dérivation envoie l'agent extincteur vers le compartiment K1, K2 qui comparativement à l'autre compartiment K2, K1, est celui qui a une ou des zones feu présentant une probabilité de risque feu la plus élevée en considérant l'architecture de l'ensemble propulsif (type de fluide inflammable, nombre de conduits transportant des liquides inflammables, condition environnementale telle que la proximité du moteur et de ses parties chaudes).

## Revendications

1. Aéronef (A) comprenant un poste de pilotage, au moins un ensemble propulsif (10) et un système anti-incendie (20) dédié à chaque ensemble propulsif, chaque système anti-incendie (20) comprenant deux réservoirs (R1, R2) contenant chacun un agent extincteur, et associée à chaque réservoir (R1, R2), une commande (C1, C2) actionnable par un pilote pour l'ouverture du réservoir afin de libérer l'agent extincteur hors du réservoir, un ensemble de détection (21) configuré pour détecter un incendie dans l'ensemble propulsif (10) auquel le système anti-incendie (20) est dédié et émettre, le cas échéant, un signal d'alerte incendie (S_Fire) à destination d'un transducteur (25) visuel ou sonore situé dans le poste de pilotage, **caractérisé en ce que** l'ensemble propulsif (10) comprend un premier et un second compartiment (K1, K2) comprenant chacun au moins une zone feu (Z1, Z2), et **en ce que** le système anti-incendie (20) comprend une vanne de dérivation (26) pilotée par une unité de localisation (27), un ensemble de canalisations reliant chaque réservoir (R1, R2) à chacune des zones feu (Z1, Z2) au travers de la vanne de dérivation (26), l'unité de localisation (27) étant configurée pour détecter un incendie dans la ou les zones feu (Z1, Z2) du premier compartiment (K1, K2), et le cas échéant, piloter la vanne de dérivation (26) dans un premier état, dit commandé, dans lequel l'agent extincteur d'un réservoir (R1, R2) est expulsé vers la ou les zones feu du premier compartiment (K1, K2) après activation de la commande (C1, C2) associée au réservoir (R1, R2), la vanne de dérivation (26) étant pilotée dans un second état sinon, dit état par défaut, dans lequel l'agent extincteur d'un réservoir (R1, R2) est expulsé vers les zones feu du second compartiment (K1, K2) après activation de la commande (C1, C2) associée au réservoir (R1, R2).

2. Aéronef (A) selon la revendication 1, **caractérisé en ce que** la vanne de dérivation (26) comprend une entrée (26a) connectée à chacun des réservoirs (R1, R2), et deux sorties (26b, 26c), avec une première sortie (26b) connectée à une canalisation débouchant dans la ou les zones feu (Z1, Z2) du premier compartiment (K1, K2) et une seconde sortie (26c) connectée à une canalisation débouchant dans la ou les zones feu (Z1, Z2) du second compartiment (K1, K2).

3. Aéronef (A) selon l'une quelconque des revendications 1 à 2, **caractérisé en ce que** l'ensemble de détection (21) comprend une unité de détection (22) à laquelle sont connectées une pluralité de boucles de détection (L), ou chaque boucle de détection (L) comprend au moins une partie dédiée à chacune des zones feu (Z1, Z2) de l'ensemble propulsif (10) et où chaque partie comprend au moins un capteur d'incendie (23, 24).

4. Aéronef (A) selon la revendication 3, **caractérisé en ce que** l'unité de détection (22) est configurée pour mesurer une valeur électrique du circuit formé par chacune des boucles de détection (L) et émettre un signal d'alerte (S_Fire) si la valeur mesurée présente une valeur indicatrice d'un incendie.

5. Aéronef (A) selon l'une quelconque des revendications 3 à 4, **caractérisé en ce que** l'unité de localisation (27) est électriquement connectée à la ou les parties des boucles de détection (L) dédiée aux zones feu (Z1, Z2) du premier compartiment (K1, K2).

6. Aéronef (A) selon la revendication 5, **caractérisé en ce que** l'unité de localisation (27) est configurée pour mesurer une valeur électrique du circuit formé par la ou les parties des boucles de détection (L) dédiée aux zones feu (Z1, Z2) du premier compartiment (K1, K2) et envoyer un signal de commande (S_Com) à la vanne de dérivation (26) pour piloter ladite vanne (26) dans son état commandé si le signal présente une valeur indicatrice d'un incendie dans le premier compartiment (K1, K2).

7. Aéronef (A) selon la revendication 4 ou la revendication 6, **caractérisé en ce que** la valeur électrique est une résistance.

## Patentansprüche

1. Luftfahrzeug (A), das ein Cockpit, mindestens eine Antriebseinheit (10) und ein jeder Antriebseinheit dediziertes Brandschutzsystem (20) enthält, wobei jedes Brandschutzsystem (20) zwei je ein Löschmittel enthaltende Behälter (R1, R2) und jedem Behälter (R1, R2) zugeordnet eine Steuerung (C1, C2), die von einem Piloten zum Öffnen des Behälters betätigbar ist, um das Löschmittel aus dem Behälter freizusetzen, eine Erfassungsgruppe (21) enthält, die konfiguriert ist, einen Brand in der Antriebseinheit (10), der das Brandschutzsystem (20) dediziert ist, zu erfassen und ggf. ein Brandwarnsignal (S_Fire) an einen im Cockpit befindlichen optischen oder akustischen Wandler (25) zu senden, **dadurch gekennzeichnet, dass** die Antriebseinheit (10) ein erstes und ein zweites Abteil (K1, K2) enthält, die je mindestens eine Feuerzone (Z1, Z2) enthalten, und dass das Brandschutzsystem (20) ein von einer Lokalisierungseinheit (27) angesteuertes Abzweigventil (26) enthält, wobei eine Gruppe von Rohrleitungen jeden Behälter (R1, R2) über das Abzweigventil (26) mit jeder der Feuerzonen (Z1, Z2) verbindet, wobei die Lokalisierungseinheit (27) konfiguriert ist, einen Brand in der oder den Feuerzonen (Z1, Z2) des ersten Abteils (K1, K2) zu erfassen und ggf. das Abzweigventil (26) in einem so genannten gesteuerten ersten Zustand anzusteuern, in dem das Löschmittel eines Behälters (R1, R2) nach Aktivierung der dem Behälter (R1, R2) zugeordneten Steuerung (C1, C2) zu der oder den Feuerzonen des ersten Abteils (K1, K2) ausgestoßen wird, wobei das Abzweigventil (26) sonst in einem so genannten standardmäßigen zweiten Zustand angesteuert wird, in dem das Löschmittel eines Behälters (R1, R2) nach Aktivierung der dem Behälter (R1, R2) zugeordneten Steuerung (C1, C2) zu den Feuerzonen des zweiten Abteils (K1, K2) ausgestoßen wird.

2. Luftfahrzeug (A) nach Anspruch 1, **dadurch gekennzeichnet, dass** das Abzweigventil (26) einen an jeden der Behälter (R1, R2) angeschlossenen Eingang (26a) und zwei Ausgänge (26b, 26c) enthält, mit einem ersten Ausgang (26b) an eine Rohrleitung angeschlossen, die in die Feuerzone (n) (Z1, Z2) des ersten Abteils (K1, K2) mündet, und einem zweiten Ausgang (26c) an eine Rohrleitung angeschlossen, die in die Feuerzone(n) (Z1, Z2) des zweiten Abteils (K1, K2) mündet.

3. Luftfahrzeug (A) nach einem der Ansprüche 1 bis 2, **dadurch gekennzeichnet, dass** die Erfassungsgruppe (21) eine Erfassungseinheit (22) enthält, an die eine Vielzahl von Erfassungsschleifen (L) angeschlossen sind, oder jede Erfassungsschleife (L) mindestens einen jeder der Feuerzonen (Z1, Z2) der Antriebseinheit (10) dedizierten Teil enthält, und wobei jeder Teil mindestens einen Brandsensor (23, 24) enthält.

4. Luftfahrzeug (A) nach Anspruch 3, **dadurch gekennzeichnet, dass** die Erfassungseinheit (22) konfiguriert ist, einen elektrischen Wert des von jeder der Erfassungsschleifen (L) gebildeten Schaltkreises zu messen und ein Warnsignal (S_Fire) auszugeben, wenn der gemessene Wert einen einen Brand anzeigenden Wert hat.

5. Luftfahrzeug (A) nach einem der Ansprüche 3 bis 4, **dadurch gekennzeichnet, dass** die Lokalisierungseinheit (27) elektrisch an den Teil oder die Teile der Erfassungsschleifen (L) angeschlossen ist, der den Feuerzonen (Z1, Z2) des ersten Abteils (K1, K2) dediziert ist.

6. Luftfahrzeug (A) nach Anspruch 5, **dadurch gekennzeichnet, dass** die Lokalisierungseinheit (27) konfiguriert ist, einen elektrischen Wert des von dem Teil oder den Teilen der Erfassungsschleifen (L) gebildeten Schaltkreises zu messen, der den Feuerzonen (Z1, Z2) des ersten Abteils (K1, K2) dediziert ist, und ein Steuersignal (S_Com) an das Abzweigventil (26) zu senden, um das Ventil (26) in seinem gesteuerten Zustand anzusteuern, wenn das Signal einen einen Brand im ersten Abteil (K1, K2) anzeigenden Wert hat.

7. Luftfahrzeug (A) nach Anspruch 4 oder Anspruch 6, **dadurch gekennzeichnet, dass** der elektrische Wert ein Widerstand ist.

## Claims

1. Aircraft (A) comprising a cockpit, at least one propulsion assembly (10) and a fire-fighting system (20) dedicated to each propulsion assembly, each fire-fighting system (20) comprising two reservoirs (R1, R2) each containing an extinguishing agent, and, associated with each reservoir (R1, R2), a control (C1, C2) that can be actuated by a pilot so as to open the reservoir in order to release the extinguishing agent from the reservoir, a detection assembly (21) configured to detect a fire in the propulsion assembly (10) to which the fire-fighting system (20) is dedicated and emit, if appropriate, a fire alert signal (S_Fire) intended for a visual or audible transducer (25) situated in the cockpit, **characterized in that** the propulsion assembly (10) comprises a first and a second compartment (K1, K2) each comprising at least one fire zone (Z1, Z2), and **in that** the fire-fighting system (20) comprises a bypass valve (26) controlled by a localization unit (27), a set of pipes connecting each reservoir (R1, R2) to each of the fire zones (Z1, Z2) through the bypass valve (26), the localization unit (27) being configured to detect a fire in the one or more fire zones (Z1, Z2) in the first compartment (K1, K2), and, if appropriate, control the bypass valve (26) so that it adopts a first state, called controlled state, in which the extinguishing agent in a reservoir (R1, R2) is expelled towards the one or more fire zones in the first compartment (K1, K2) after activation of the control (C1, C2) associated with the reservoir (R1, R2), the bypass valve (26) otherwise being controlled so as to adopt a second state, called default state, in which the extinguishing agent in a reservoir (R1, R2) is expelled towards the fire zones in the second compartment (K1, K2) after activation of the control (C1, C2) associated with the reservoir (R1, R2) .

2. Aircraft (A) according to Claim 1, **characterized in that** the bypass valve (26) comprises an inlet (26a) connected to each of the reservoirs (R1, R2), and two outlets (26b, 26c), with a first outlet (26b) connected to a pipe opening into the one or more fire zones (Z1, Z2) in the first compartment (K1, K2) and a second outlet (26c) connected to a pipe opening into the one or more fire zones (Z1, Z2) in the second compartment (K1, K2).

3. Aircraft (A) according to either one of Claims 1 and 2, **characterized in that** the detection assembly (21) comprises a detection unit (22) to which a plurality of detection loops (L) are connected, or each detection loop (L) comprises at least one part dedicated to each of the fire zones (Z1, Z2) of the propulsion assembly (10) and wherein each part comprises at least one fire sensor (23, 24).

4. Aircraft (A) according to Claim 3, **characterized in that** the detection unit (22) is configured to measure an electrical value of the circuit formed by each of the detection loops (L) and emit an alert signal (S_Fire) if the measured value has a value that is indicative of a fire.

5. Aircraft (A) according to either one of Claims 3 and 4, **characterized in that** the localization unit (27) is electrically connected to the one or more parts of the detection loops (L) dedicated to the fire zones (Z1, Z2) in the first compartment (K1, K2).

6. Aircraft (A) according to Claim 5, **characterized in that** the localization unit (27) is configured to measure an electrical value of the circuit formed by the one or more parts of the detection loops (L) dedicated to the fire zones (Z1, Z2) in the first compartment (K1, K2) and send a control signal (S_Com) to the bypass valve (26) so as to control said valve (26) so that it adopts its controlled state if the signal has a value that is indicative of a fire in the first compartment (K1, K2).

7. Aircraft (A) according to Claim 4 or Claim 6, **characterized in that** the electrical value is a resistance.
